# EUROPEAN PATENT SPECIFICATION

(11) **EP 2 678 274 B1**
(45) Date of publication and mention of the grant of the patent: **08.04.2015**
(21) Application number: 12708446.5
(22) Date of filing: 22.02.2012
(51) Int. Cl.: C01G 23/02

(54) **PURIFICATION OF TiCl4 THROUGH THE PRODUCTION OF NEW CO-PRODUCTS**
REINIGUNG VON TICL4 DURCH ERZEUGUNG NEUER NEBENPRODUKTE
PURIFICATION DE TICL4 GRÂCE À LA PRODUCTION DE NOUVEAUX CO-PRODUITS

(30) Priority: 23.02.2011 US 201161445792 P
(43) Date of publication of application: 01.01.2014
(73) Proprietor: E.I. Du Pont De Nemours and Company, Wilmington, Delaware 19898 (US)
(72) Inventor: HELBERG, Lisa Edith, Middletown, Delaware 19709 (US)
(74) Representative: Towler, Philip Dean
(86) International application number: PCT/US2012/026176
(87) International publication number: WO 2012/116104

(56) References cited:
- GB-A- 732 941
- US-A- 2 416 191
- US-A1- 2002 179 427

## Description

### BACKGROUND OF THE INVENTION

Pigmentary TiO₂ is commercially produced through the sulfate or the chloride process. The chloride process is also used to produce TiCl₄ for titanium metal production. In the chloride process, titanoferrous ore is carbochlorinated to produce TiCl₄ and a range of other metal chlorides from the ore impurities. The crude TiCl₄ produced in the carbochlorination is processed with a series of physical separation steps to produce a usable TiCl₄ product. One contaminating element found in titanoferrous ore is vanadium. The vanadium chlorination products, VOCl₃ or VCl₄, have boiling points close to that of TiCl₄, making removal more problematic.

Removal of vanadium from crude TiCl₄ is thus one of the critical manufacturing steps in producing pure TiCl₄ for use in TiO₂ manufacture or any other use such as titanium metal manufacture. This process must be done keeping in mind the purity requirements of the pure TiCl₄ as well as the characteristics of the other materials made in the vanadium removal step. The disposition of the resulting vanadium stream has long had multiple technical issues including the processing difficulties of the stream, titanium yield loss, and limitations of use for this stream for other commercial products.

One typical vanadium removal process uses an organic based treating agent, such as a fatty acid or a mineral oil, to remove the vanadium present in the crude TiCl₄. In this purification method, the crude TiCl₄ is reacted in the liquid state with the organic liquid or melted solid, typically at elevated temperature. The liquid vanadium chlorides mixed in the TiCl₄ are converted to a solid form of vanadium, mixed with a solid organic matrix. The "vanadium-sludge" solid is then removed from the liquid TiCl₄.

The disadvantages to organic treatment are numerous. For example, the vanadium-organic sludge produced is very sticky and can be difficult to dry. In the vanadium reaction area, these sticky solids continually build-up on the walls of the process equipment, requiring washing. This washing is potentially hazardous, an uptime detractor, an on-going maintenance cost, and a capital cost.

Another disadvantage of the organic treatment is that, due to the sticky nature of the solids, they can detract from TiCl₄ yield through incomplete drying in the evaporation step. Further, the organic treating agents themselves can react directly with the TiCl₄ producing a direct yield loss in this reaction. Additionally, the vanadium solids have some inherent hazards. The organic contamination in the vanadium sludge also makes it very difficult and hazardous to process the vanadium into a form that could be used in a commercial process, such as steel manufacture. Further, the practice of mixing the vanadium sludge with an iron chloride stream for drying has some side products that are undesirable. Finally, the reaction of the organic liquid and vanadium produces light organic fragments that contaminate the pure TiCl₄. These light organic fragments can make the resulting pure TiCl₄ unsuitable for use in titanium metal manufacture as well as some other, non-TiO₂ products. In TiO₂ manufacture, the organic fragments can cause process control issues.

Another typical vanadium removal process uses copper metal to remove the vanadium from the crude TiCl₄. In this process, the copper can be introduced as a powder. The vanadium in the crude TiCl₄ reacts on the surface of the copper metal to form a vanadium solid. The resulting pure TiCl₄ can then be separated from the solids by evaporation. Alternatively, the crude TiCl₄ is boiled through a column that is packed with copper rings. The vanadium in the vapor reacts with the surface of the copper metal ring and the TiCl₄ proceeds through the column.

The disadvantages of the copper process are primarily cost and waste stream handling. Copper metal is very expensive compared to the organic treating agents. The waste stream from the copper reaction is difficult to handle. Copper chloride is formed in the process, which coats the surface of the copper rings and stops the reaction from being able to go to completion. The copper chloride must be removed by washing with water when large copper rings are used. Washing and drying the rings for re-use can be a hazardous process. Either way, the resulting vanadium stream is contaminated with copper chloride. The copper chloride must be separated before the vanadium solid would be suitable for commercial use.

U.S. Patent No. 2 416 191 discloses a method for the purification of titanium tetrachloride by reaction of TiCl₄ containing vanadium with elemental tin and alkaline earth hydroxide, followed by distillation of the treated titanium tetrachloride.

Thus, the problem to be solved is removal of vanadium from TiCl₄ produced via the chloride process in an economical, efficient, and safe manner.

### SUMMARY OF THE INVENTION

Applicants have solved the aforementioned problems by using tin metal or SnCl₂ to remove vanadium from crude TiCl₄ produced via the chloride process.

One aspect is for a process for the purification of TiCl₄ comprising contacting vanadium-containing crude TiCl₄ with tin to produce purified TiCl₄, SnCl₄, and solid vanadium and separating the solid vanadium from the purified TiCl₄ and SnCl₄. The contacting and separating steps are performed by a two stage process comprising reducing the vanadium content in the vanadium-containing crude TiCl₄ by contacting the vanadium-containing crude TiCl₄ with a less than excess amount of tin to produce partially purified TiCl₄, SnCl₄, and solid vanadium; separating the solid vanadium from the partially purified TiCl₄ and SnCl₄; further reducing the vanadium content in the partially purified TiCl₄ by contacting the partially purified TiCl₄ with an excess of tin to produce purified TiCl₄, SnCl₄, solid vanadium, and excess tin; and separating the solid vanadium and excess tin from the purified TiCl₄ and SnCl₄.

Another aspect is for a process for the purification of TiCl₄ comprising contacting vanadium-containing crude TiCl₄ with SnCl₂ to produce purified TiCl₄, SnCl₄, and solid vanadium and separating the solid vanadium from the purified TiCl₄ and SnCl₄. In some aspects, the contacting and separating steps are performed by a two stage process comprising reducing the vanadium content in the vanadium-containing crude TiCl₄ by contacting the vanadium-containing crude TiCl₄ with a less than excess amount of SnCl₂ to produce partially purified TiCl₄, SnCl₄, and solid vanadium; separating the solid vanadium from the partially purified TiCl₄ and SnCl₄; further reducing the vanadium content in the partially purified TiCl₄ by contacting the partially purified TiCl₄ with an excess of SnCl₂ to produce purified TiCl₄, SnCl₄, solid vanadium, and excess SnCl₂; and separating the solid vanadium and excess SnCl₂ from the purified TiCl₄ and SnCl₄.

Other objects and advantages will become apparent to those skilled in the art upon reference to the detailed description that hereinafter follows.

### DETAILED DESCRIPTION

When an amount, concentration, or other value or parameter is given as either a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

When tin metal or SnCl₂ is reacted with the vanadium in the crude TiCl₄ (i.e., titanium tetrachloride produced by a chloride process, which has been subjected to partial purification procedures to remove some metal chlorides), a solid vanadium product is produced along with SnCl₄. This treatment process works with all ranges of vanadium seen in the variety of ores available with levels from 100 ppm V to 3000 ppm V but has not been seen to have any limitations either with lower or higher concentrations. SnCl₄ is a liquid, not a solid like copper chloride. As a result, the SnCl₄ does not contaminate the vanadium solid. Tin metal, being a milder reducing agent, also does not appear to react with TiCl₄, unlike copper metal. As a result, a simple two stage reactor system can be used with tin powder or SnCl₂ with essentially no extra yield loss of TiCl₄ or tin through reaction with the purified TiCl₄. By the term "purified TiCl₄" it is meant that the concentration of the vanadium in the TiCl₄ is at least significantly lowered if not reduced to a level below that which can be detected by known analytical techniques. The product TiCl₄ has vanadium removed to a level suitable for use in the production of TiO₂ or titanium metal. Additionally, vanadium can be lowered to an operator specified concentration.

In the step of contacting the crude TiCl₄ with the tin material, the tin can be added to the TiCl₄ by any suitable addition or mixing method. The tin can be added as a fine powder using known engineering methods such as a star valve or screw feeder with appropriate consideration made for controlling TiCl₄ vapors back flowing into the system. When SnCl₂ is used, additional care must be taken to minimize moisture since SnCl₂ is hydroscopic. Mixing of the tin powder with the crude TiCl₄ may be done with agitation such as paddle mixer, sparging, or other engineering methods appropriate for the difficulties associated with handling TiCl₄. The amount of tin added to the crude TiCl₄ is a less than excess amount. A two stage configuration allows less excess to be used in the final stage, and amounts such as eight times excess can be used. The excess used in the final stage is also utilized later in the first stage.

SnCl₄ can be separated from the resulting pure TiCl₄ through, for example, distillation. SnCl₄ is a valuable product used as a catalyst and the starting material for the production of organometallic tin compounds that are used in a wide variety of applications. So, in this process, two valuable coproducts are produced and many other technical problems are eliminated.

First, a solid vanadium product is produced that is more suitable to become a feedstock into other processes such as the production of steel. The residual solid is not contaminated with treating agent such as copper chloride or organic residue that must be separated.

Second, the reaction between the vanadium and tin can be driven to complete utilization of the tin. With copper rings, the solid copper chloride blocks the reaction surface of the fresh copper and must be washed off with aqueous HCl. With tin, liquid SnCl₄ is produced that is removed from the surface allowing the reaction to continue with more vanadium. The production of a liquid also avoids the issues of purification of the vanadium product seen with both organic treating agents and copper. The solid vanadium from this process is a flowable, black powder. It is moisture sensitive and hydroscopic, but has no combustion hazard since no carbon is present. It is also not sticky like the organic treating agent-produced vanadium solids. Therefore, the fouling potential of this material is low, significantly reducing the engineering complications in production as well as improving the safety of the process through elimination of equipment fouling.

Third, a valuable product is produced in the reaction instead of material with disposal issues. SnCl₄ is typically made through the reaction of tin metal and chlorine at elevated temperatures. In this reaction, instead of using virgin chlorine, the chloride ligand is obtained in the purification process. These chlorine ligands would be lost, for example through the copper chloride disposal in other systems. In this case, the chloride, an expensive and energy intensive reagent, is conserved instead of lost.

Fourth, no opportunity for undesirable production of Persistent Bio-accumulative and Toxic (PBT) organic compounds exists because no carbon is introduced into the system. When organic treating agents are used, the combination of heat, chlorine and carbon can under some conditions produce PBTs such as chlorinated dioxins and furans.

In some embodiments, the SnCl₄ is subsequently recovered from the TiCl₄. This separation can be accomplished through, for example, distillation. All of the SnCl₄ does not need to be removed from the TiCl₄ for the TiCl₄ to be used for TiO₂ production. Most of the SnCl₄ could be recovered in this process and recycled to produce a more concentrated SnCl₄ stream. The concentration of SnCl₄ does not impact the rate of the vanadium removal step One example of the separation of TiCl₄ and SnCl₄ would involve two separate distillation columns. The first column would be fed the product from the vanadium removal stage to the upper portion of the column. TiCl₄ suitable for commercial use would be collected from the bottom of the first column. The purity requirements for TiCl₄ used for TiO₂ or titanium metal manufacture would determine the configuration of this column, typically set using Aspen modeling conditions or similar engineering principles. The stream collected from the top of the first column would provide the reflux flow to the first column and feed a second column. The second column would be used to produce a finished SnCl₄ product from the top of the column. The material from the bottom of the second column would be high in TiCl₄ and lower in SnCI₄. The bottom material would be recycled to the tank used to provide the reflux to the first column. In this manner, no TiCl₄ would be lost while conserving energy. The size of the columns and number of trays would be related to the amount of vanadium present in the crude TiCl₄ since that will determine the amount of SnCl₄ present. SnCl₄ can also be present in crude TiCl₄ due to tin oxide in the ores. The SnCl₄ from the crude TiCl₄ will also be accounted for in the distillation.

When tin metal is used is the claimed process, the crude TiCl₄ is purified in two stages. When SnCl₂ is used, the crude TiCl₄ may be purified in two stages. In the first stage, the vanadium concentration is only partially reduced so that the tin metal or SnCl₂ reaction can be driven to completion. The solid vanadium product is separated from this stage and a liquid (or vapor) TiCl₄ stream containing vanadium is transferred to a second stage. This step preferably occurs at least at the boiling point of TiCl₄ (136 °C). More preferably, this step occurs under pressure at temperatures elevated above the boiling point of TiCl₄ (about 150 °C to about 200 °C range). The vanadium solids can be collected in a drying chamber, for example a drying chamber found after a purge separation (see, e.g., U.S. Patent No. 7,368,096). Alternatively, they may be collected by other known engineering methods such as, for example, filtration.

In the second stage, the vanadium is removed to the desired low levels and excess tin metal or SnCl₂ is present. The vanadium content can be controlled through a feedback loop measured by a UV/Vis or UV/Vis diode array instrument. The excess tin metal or SnCl₂ stream (containing some vanadium solid) is removed and can be sent to the first stage for further reaction. The TiCl₄/SnCl₄ with no vanadium is then separated, in one embodiment in a distillation column.

Distillation may be operated in different methods depending on the end use of the TiCl₄. In one embodiment, the initial TiCl₄/SnCl₄ mixture is sent to a rough distillation column where a stream containing low enough amounts of SnCl₄ in TiCl₄ is produced from the bottom of the column and a high SnCl₄ stream is produced from the top of the column. The bottom stream of TiCl₄ can be used to produce TiO₂. The top stream can be sent to a polishing distillation column which is used to produce a pure SnCl₄ stream from the top and a rough TiCl₄/SnCl₄ stream from the bottom. The bottom stream from this column can be recycled back to the start of the first distillation column. Through the use of multiple distillation columns, essentially no TiCl₄ yield loss occurs and both a TiCl₄ product and SnCl₄ product can be produced. A third distillation column (or batch operation of the second distillation column) can be used in some embodiments to produce a TiCl₄ product ideal for titanium metal production. The benefit of using elemental tin or SnCl₂ compared to organic treating agents is no organic residue is present in the TiCl₄, which is highly detrimental to the titanium metal.

The TiCl₄ product of the process described herein can be used in any application for which titanium tetrachloride is useful. The TiCl₄ can be used as a starting material for making titanium dioxide and derivatives thereof especially as a feedstream for the well-known chlorination and oxidation processes for making titanium dioxide.

Titanium dioxide can be suitable for use as a pigment. The majority of TiO₂ produced is used for this property. Common applications are in paints, paper and plastics. The TiCl₄ produced in this process is suitable for use in production of TiO₂ for all of these applications.

Titanium dioxide is useful in, for example, compounding; extrusion of sheets, films and shapes; pultrusion; coextrusion; ram extrusion; spinning; blown film; injection molding; insert molding; isostatic molding; compression molding; rotomolding; thermoforming; sputter coating; lamination; wire coating; calendaring; welding; powder coating; sintering; cosmetics; and catalysts.

Alternatively, titanium dioxide can be in the nano-size range (average particle diameter less than 100 nm), which is usually translucent or transparent. TiO₂ of this particle size range is typically used for non-optical properties such as photo-protection.

The TiCl₄ from this process is also suitable for use to produce titanium metal through any of the known commercial pathways such as the Kroll and Hunter processes. The TiCl₄ is also suitable for use in the production of titanium based catalysts such as organo-titanates or Ziegler-Natta type catalysts.

### EXAMPLES

The present invention is further defined in the following Examples. It should be understood that these Examples, while indicating preferred embodiments of the invention, are given by way of illustration only.

### Reference Example 1

### Stock Soluntion and One Stage Removal with Elemental Sn

A stock solution containing 3540 ppm V as VOCl₃ in TiCl₄ was prepared. A simple reaction flask was assembled containing a 250 mL round bottom flask, a magnetic stirrer, a heating mantle, and a powder addition funnel. For collection of the distillate, a simple Dean Stark trap was used with a large dry ice trap attached. A 100 mL aliquot of the bright yellow stock solution was added to the round bottom flask. After heating the solution to 100 °C, 3.1 g of powdered elemental Sn (<45 micron size, Aldrich, 98.8%) was added all together to the flask using the powder addition funnel. The mixture was refluxed together for 4 hours removing all of the yellow color from the distillate. The colorless TiCl₄ was then distilled from the solids and collected using the Dean Stark trap. After removal of the TiCl₄, the solids were dried *in situ* with flowing N₂. The overheads were measured to contain <10 ppm V as well as containing 2700 ppm Sn present as SnCl₄.

### Example 2

### Crude TiCl₄ and Two Stage Removal with Elemental Sn

A 100 mL aliquot of commercial crude TiCl₄ was added into a 250 mL reaction flask equipped with a magnetic stirrer, heating mantle, powder addition funnel and Dean Stark trap for condensate collection. The crude TiCl₄ contained a range of impurities including vanadium, iron and other elements including SnCl₄. The dark yellow TiCl₄ was heated to 100 °C and mixed with 1.2 g of powdered elemental Sn. The TiCl₄ and Sn were refluxed together for 12 hours to ensure that an endpoint had been achieved. The distillate was still a strong yellow color indicating that only a portion of the vanadium was removed. Another 1.1 g of Sn was then added. The slurry was refluxed for 1 more hour. All of the color was removed from the distillate. The TiCl₄ was then distilled from the solids. The overheads were measured to contain < 1 ppm V. They also contained 2000 ppm of Sn which includes the SnCl₄ which was present in the crude TiCl₄.

### Example 3

### Stock Solution and Two Stage Removal with SnCl₂

A stock solution containing 3700 ppm V as VOCl₃ in TiCl₄ was prepared. A reaction flask was assembled containing a 250 mL round bottom flask, a magnetic stirrer, a heating mantle, and a powder addition funnel. For collection of the distillate, a Dean Stark trap was used with a large dry ice trap attached. A 100 mL aliquot of the bright yellow stock solution was added to the round bottom flask. After heating to 100 °C, 4.4 g of powdered SnCl₂ was added using the solids addition funnel. The mixture was refluxed together for 5 hours removing part of the yellow color from the distillate. Another 4.1 g of powdered SnCl₂ was added. The solution was refluxed for 5 hours more, followed by distilling the TiCl₄ from the solids. The overheads were measured to contain <10 ppm V as well as containing 6100 ppm Sn present as SnCl₄.

### Reference Example 4

### Stock Solution and One Stage Removal with Sn

A 100 mL aliquot of purified TiCl₄ was added into a 250 mL reaction flask equipped with a magnetic stirrer, heating mantle, powder addition funnel and Dean Stark trap for condensate collection. An aliquot of 2.07 g of VCl₄ was added by syringe, creating a dark solution. Using the powder addition funnel, 1.33 g of powdered elemental Sn (<45 micron size, Aldrich, 98.8%) was added at room temperature. The mixture was heated at reflux for 4 hours with all of the color being removed from the overheads. The liquid was distilled from the solids and measured to contain <5 ppm V plus 2500 ppm Sn, present as SnCl₄.

## Claims

1. A process for the purification of TiCl₄ comprising:
(a) contacting vanadium-containing crude TiCl₄ with tin to produce purified TiCl₄, SnCl₄, and solid vanadium; and
(b) separating the solid vanadium from the purified TiCl₄ and SnCl₄, wherein the contacting and separating steps are performed by a two stage process comprising:
(i) reducing the vanadium content in the vanadium-containing crude TiCl₄ by contacting the vanadium-containing crude TiCl₄ with a less than excess amount of tin to produce partially purified TiCl₄, SnCl₄, and solid vanadium;
(ii) separating the solid vanadium from the partially purified TiCl₄ and SnCl₄;
(iii) further reducing the vanadium content in the partially purified TiCl₄ by contacting the partially purified TiCl₄ with an excess of tin to produce purified TiCl₄, SnCl₄, solid vanadium, and excess tin; and
(iv) separating the solid vanadium and excess tin from the purified TiCl₄ and SnCl₄.

2. The process of claim 1 comprising after step (b) the further step of separating the purified TiCl₄ from the SnCl₄.

3. The process of claim 2, wherein the step of separating the purified TiCl₄ from the SnCl₄ is performed by distillation.

4. The process of claim 1, wherein step (i) is performed at a temperature of at least 136°C.

5. The process of claim 4, wherein step (i) is performed at a temperature in the range of at least about 150 °C to at least about 200 °C.

6. The process of claim 1, wherein the solid vanadium of step (iv) is substantially free of residual treating agents.

7. The process of claim 1 comprising after step (iv) the further steps of:
(v) recycling the solid vanadium and excess tin of step (iv) back into the vanadium-containing crude TiCl₄ of step (i); and
(vi) repeating steps (i)-(iv).

8. A process for the purification of TiCl₄ comprising:
(a) contacting vanadium-containing crude TiCl₄ with SnCl₂ to produce purified TiCl₄, SnCl₄, and solid vanadium; and
(b) separating the solid vanadium from the purified TiCl₄ and SnCl₄.

9. The process of claim 8 comprising after step (b) the further step of separating the purified TiCl₄ from the SnCl₄.

10. The process of claim 9, wherein the step of separating the purified TiCl₄ from the SnCl₄ is performed by distillation.

11. The process of claim 8, wherein the contacting and separating steps are performed by a two stage process comprising:
(i) reducing the vanadium content in the vanadium-containing crude TiCl₄ by contacting the vanadium-containing crude TiCl₄ with a less than excess amount of SnCl₂ to produce partially purified TiCl₄, SnCl₄, and solid vanadium;
(ii) separating the solid vanadium from the partially purified TiCl₄ and SnCl₄;
(iii) further reducing the vanadium content in the partially purified TiCl₄ by contacting the partially purified TiCl₄ with an excess of SnCl₂ to produce purified TiCl₄, SnCl₄, solid vanadium, and excess SnCl₂; and
(iv) separating the solid vanadium and excess SnCl₂ from the purified TiCl₄ and SnCl₄.

12. The process of claim 11, wherein step (i) is performed at a temperature of at least 136 °C.

13. The process of claim 12, wherein step (i) is performed at a temperature in the range of at least about 150 °C to at least about 200 °C.

14. The process of claim 11, wherein the solid vanadium of step (iv) is substantially free of residual treating agents.

15. The process of claim 11 comprising after step (iv) the further steps of:
(v) recycling the solid vanadium and excess SnCl₂ of step (iv) back into the vanadium-containing crude TiCl₄ of step (i); and
(vi) repeating steps (i)-(iv).

## Patentansprüche

1. Verfahren für die Reinigung von TiCl₄, umfassend:
(a) das Kontaktieren von vanadiumhaltigem rohem TiCl₄ mit Zinn, um gereinigtes TiCl₄, SnCl₄ und festes Vanadium herzustellen; und
(b) das Abtrennen des festen Vanadiums von dem gereinigten TiCl₄ und SnCl₄, wobei die Kontaktier- und Abtrennschritte durch eine Zweistufenverfahren durchgeführt werden, umfassend:
(i) das Reduzieren des Vanadiumgehalts in dem vanadiumhaltigen rohen TiCl₄ durch Kontaktieren des vanadiumhaltigen rohen TiCl₄ mit einer weniger als überschüssigen Menge Zinn, um teilweise gereinigtes TiCl₄, SnCl₄ und festes Vanadium herzustellen;
(ii) das Abtrennen des festen Vanadiums von dem teilweise gereinigten TiCl₄ und SnCl₄;
(iii) das weitere Reduzieren des Vanadiumgehalts in dem teilweise gereinigten TiCl₄ durch Kontaktieren des teilweise gereinigten TiCl₄ mit einem Überschuss an Zinn, um gereinigtes TiCl₄, SnCl₄ festes Vanadium und überschüssiges Zinn herzustellen; und
(iv) das Abtrennen des festen Vanadiums und des überschüssigen Zinns von dem gereinigten TiCl₄ und SnCl₄.

2. Verfahren nach Anspruch 1, das nach Schritt (b) den weiteren Schritt des Abtrennens des gereinigten TiCl₄ von dem SnCl₄ umfasst.

3. Verfahren nach Anspruch 2, wobei der Schritt des Abtrennens des gereinigten TiCl₄ von dem SnCl₄ durch Destillation durchgeführt wird.

4. Verfahren nach Anspruch 1, wobei der Schritt (i) bei einer Temperatur von mindestens 136 °C durchgeführt wird.

5. Verfahren nach Anspruch 4, wobei der Schritt (i) bei einer Temperatur im Bereich von mindestens etwa 150 °C bis mindestens etwa 200 °C durchgeführt wird.

6. Verfahren nach Anspruch 1, wobei das feste Vanadium aus Schritt (iv) im Wesentlichen von restlichen Behandlungsmitteln frei ist.

7. Verfahren nach Anspruch 1, das nach Schritt (iv) die weiteren folgenden Schritte umfasst:
(v) Rückführen des festen Vanadiums und überschüssigen Zinns aus Schritt (iv) in das vanadiumhaltige rohe TiCl₄ aus Schritt (i); und
(vi) Wiederholen der Schritte (i) - (iv).

8. Verfahren für die Reinigung von TiCl₄, umfassend:
(a) das Kontaktieren von vanadiumhaltigem rohem TiCl₄ mit SnCl₂, um gereinigtes TiCl₄, SnCl₄ und festes Vanadium herzustellen; und
(b) das Abtrennen des festen Vanadiums von dem gereinigten TiCl₄ und SnCl₄.

9. Verfahren nach Anspruch 8, das nach Schritt (b) den weiteren Schritt des Abtrennens des gereinigten TiCl₄ von dem SnCl₄ umfasst.

10. Verfahren nach Anspruch 9, wobei der Schritt des Abtrennens des gereinigten TiCl₄ von dem SnCl₄ durch Destillation durchgeführt wird.

11. Verfahren nach Anspruch 8, wobei die Kontaktier- und Trennungsschritte durch ein Zweistufenverfahren durchgeführt werden, umfassend:
(i) das Reduzieren des Vanadiumgehalts in dem vanadiumhaltigen rohen TiCl₄ durch Kontaktieren des vanadiumhaltigen rohen TiCl₄ mit weniger als einer überschüssigen Menge SnCl₂, um teilweise gereinigtes TiCl₄, SnCl₄ und festes Vanadium herzustellen;
(ii) das Abtrennen des festen Vanadiums von dem teilweise gereinigten TiCl₄ und SnCl₄;
(iii) das weitere Reduzieren des Vanadiumgehalts in dem teilweise gereinigten TiCl₄ durch Kontaktieren des teilweise gereinigten TiCl₄ mit einem Überschuss an SnCl₂, um gereinigtes TiCl₄, SnCl₄, festes Vanadium und überschüssiges SnCl₂ herzustellen; und
(iv) das Abtrennen des festen Vanadiums und überschüssigen SnCl₂ von dem gereinigten TiCl₄ und SnCl₄.

12. Verfahren nach Anspruch 11, wobei der Schritt (i) bei einer Temperatur von mindestens 136 °C durchgeführt wird.

13. Verfahren nach Anspruch 12, wobei der Schritt (i) bei einer Temperatur im Bereich von mindestens etwa 150 °C bis mindestens etwa 200 °C durchgeführt wird.

14. Verfahren nach Anspruch 11, wobei das feste Vanadium aus Schritt (iv) im Wesentlichen von restlichen Behandlungsmitteln frei ist.

15. Verfahren nach Anspruch 11, das nach Schritt (iv) die weiteren folgenden Schritte umfasst:
(v) Rückführen des festen Vanadiums und überschüssigen SnCl₂ aus Schritt (iv) in das vanadiumhaltige rohe TiCl₄ aus Schritt (i); und
(vi) Wiederholen der Schritte (i) - ((iv).

## Revendications

1. Procédé de purification de TiCl₄ comprenant:
(a) la mise en contact de TiCl₄ brut contenant du vanadium avec de l'étain pour produire du TiCl₄ purifié, du SnCl₄, et du vanadium solide; et
(b) la séparation du vanadium solide du TiCl₄ purifié et du SnCl₄, où les étapes de mise en contact et de séparation sont exécutées à travers un procédé en deux étages comprenant:
(i) la réduction de la teneur en vanadium dans le TiCl₄ brut contenant du vanadium par la mise en contact du TiCl₄ brut contenant du vanadium avec une quantité moins qu'en excès d'étain pour produire du TiCl₄ partiellement purifié, du SnCl₄, et du vanadium solide;
(ii) la séparation du vanadium solide du TiCl₄ partiellement purifié et du SnCl₄;
(iii) la réduction supplémentaire de la teneur en vanadium dans le TiCl₄ partiellement purifié par la mise en contact du TiCl₄ partiellement purifié avec un excès d'étain pour produire du TiCl₄ purifié, du SnCl₄, du vanadium solide, et de l'étain en excès; et
(iv) la séparation du vanadium solide et de l'étain en excès du TiCl₄ purifié et du SnCl₄.

2. Procédé selon la revendication 1 comprenant après l'étape (b) l'étape supplémentaire de séparation du TiCl₄ purifié du SnCl₄.

3. Procédé selon la revendication 2, dans lequel l'étape de séparation du TiCl₄ purifié du SnCl₄ est exécutée par distillation.

4. Procédé selon la revendication 1, dans lequel l'étape (i) exécutée à une température d'au moins 136°C.

5. Procédé selon la revendication 4, dans lequel l'étape (i) est exécutée à une température située dans la plage d'au moins environ 150°C jusqu'à au moins environ 200°C.

6. Procédé selon la revendication 1, dans lequel le vanadium solide de l'étape (iv) est substantiellement exempt d'agents de traitement résiduels.

7. Procédé selon la revendication 1 comprenant après l'étape (iv) les étapes supplémentaires de:
(v) recyclage du vanadium solide et de l'étain en excès de l'étape (iv) en retour dans le TiCl₄ brut contenant du vanadium de l'étape (i); et
(vi) répétition des étapes (i) à (iv).

8. Procédé de purification de TiCl₄ comprenant:
(a) la mise en contact du TiCl₄ brut contenant du vanadium avec du SnCl₂ pour produire du TiCl₄ purifié, du SnCl₄, et du vanadium solide; et
(b) la séparation du vanadium solide du TiCl₄ purifié et du SnCl₄.

9. Procédé selon la revendication 8 comprenant après l'étape (b) l'étape supplémentaire de séparation du TiCl₄ purifié du SnCl₄.

10. Procédé selon la revendication 9, dans lequel l'étape de séparation du TiCl₄ purifié du SnCl₄ est exécutée par distillation.

11. Procédé selon la revendication 8, où les étapes de mise en contact et de séparation sont exécutées à travers un procédé en deux étages comprenant:
(i) la réduction de la teneur en vanadium dans le TiCl₄ brut contenant du vanadium par mise en contact du TiCl₄ brut contenant du vanadium avec une quantité moins qu'en excès de SnCl₂ pour produire du TiCl₄ partiellement purifié, du SnCl₄, et du vanadium solide;
(ii) la séparation du vanadium solide du TiCl₄ partiellement purifié et du SnCl₄;
(iii) la réduction supplémentaire de la teneur en vanadium dans le TiCl₄ partiellement purifié par la mise en contact du TiCl₄ partiellement purifié avec un excès de SnCl₂ pour produire du TiCl₄ purifié, du SnCl₄, du vanadium solide, et du SnCl₂ en excès; et
(iv) la séparation du vanadium solide et du SnCl₂ en excès du TiCl₄ purifié et du SnCl₄.

12. Procédé selon la revendication 11, dans lequel l'étape (i) est exécutée à une température d'au moins 136°C.

13. Procédé selon la revendication 12, dans lequel étape (i) est exécutée à une température située dans la plage d'au moins environ 150°C jusqu'à au moins environ 200°C.

14. Procédé selon la revendication 11, dans lequel le vanadium solide de l'étape (iv) est substantiellement exempt d'agents de traitement résiduels.

15. Procédé selon la revendication 11 comprenant après l'étape (iv) les étapes supplémentaires de:
(v) recyclage du vanadium solide et du SnCl₂ en excès de l'étape (iv) en retour dans le TiCl₄ brut contenant du vanadium de l'étape (i); et
(vi) répétition des étapes (i) à (iv).
